# FASCICULE DE BREVET EUROPEEN

(11) **EP 3 461 030 B1**
(45) Date de publication et mention de la délivrance du brevet: **27.05.2020**
(21) Numéro de dépôt: 18195245.8
(22) Date de dépôt: 18.09.2018
(51) Int. Cl.: H04B 7/185

(54) **MÉTHODE D'ALLOCATION DE RESSOURCES FRÉQUENTIELLES POUR UN SYSTÈME DE TÉLÉCOMMUNICATION PAR SATELLITE**
ZUORDNUNGSVERFAHREN VON FREQUENZRESSOURCEN FÜR EIN TELEKOMMUNIKATIONSSYSTEM ÜBER SATELLIT
METHOD FOR ALLOCATING FREQUENCY RESOURCES FOR A SATELLITE TELECOMMUNICATION SYSTEM

(30) Priorité: 26.09.2017 FR 1700986
(43) Date de publication de la demande: 27.03.2019
(73) Titulaire: Thales, 92400 Courbevoie (FR)
(72) Inventeur: GAYRARD, Jean-Didier, 31100 Toulouse (FR)
(74) Mandataire: Hammes, Pierre

(56) Documents cités:
- US-A1- 2003 073 435
- US-A1- 2003 203 737
- US-A1- 2016 191 145

## Description

L'invention concerne le domaine des systèmes à très haut débit par satellite ou des systèmes de communication par accès très large bande à Internet par satellite géostationnaire encore appelés systèmes VHTS pour « Very High Throughput Satellite » en anglais. L'invention concerne plus précisément les satellites comprenant plusieurs antennes pour réaliser une couverture multifaisceaux.

L'invention porte sur une méthode d'allocation de ressources fréquentielles à différents terminaux utilisateurs présents dans la zone de couverture multifaisceaux du satellite. La méthode d'allocation de ressources proposée est dynamique en temps et en fréquence et apporte une flexibilité d'allocation des ressources à chaque spot de la couverture selon les conditions de propagation des signaux radio dans le spot, selon les performances d'isolation entre faisceaux du système d'antenne satellitaire et selon la nature et le volume du trafic de données en cours et à venir dans le spot. L'invention est utile dans les systèmes à très haut débit par satellite à couverture multi-faisceau opérant notamment en bande Ka (20/30 GHz).

Dans les systèmes à très haut débit par satellite à couverture multifaisceaux et à réutilisation de fréquence entre faisceaux, l'allocation des ressources en fréquence et en puissance radio est généralement fixe par conception de la charge utile du satellite. Typiquement, dans un système à très haut débit par satellite opérant en bande Ka (20/30 GHz), à chaque faisceau de la couverture est alloué une puissance radiofréquence (RF) fixe correspondant à la puissance de sortie de l'amplificateur connecté au faisceau, et une bande de fréquence fixe correspondant à une couleur du schéma de réutilisation de fréquence. Dans un système multifaisceaux à réutilisation de fréquences, la bande passante allouée à la mission, typiquement la bande Ka de 17.3 GHz à 20.2 GHz, est découpée en sous-bandes de fréquences ou couleurs. Une couleur est allouée à chaque spot de la couverture selon un schéma qui permet de minimiser les interférences entre faisceaux. Par exemple, dans un système opérant en bande Ka (20/30 GHz) selon un schéma de réutilisation de fréquence à quatre couleurs et deux polarisations, à chaque spot de la couverture est alloué de façon fixe une bande de fréquence de 1.4 GHz de bande passante et une puissance RF transmise par un amplificateur à onde progressive d'une centaine de watts. Afin de minimiser les interférences entre faisceaux de l'antenne, il est d'usage de générer des faisceaux identiques en diagramme de rayonnement, conduisant à des spots de taille égale dans toute la couverture.

Les systèmes à très haut débit par satellite à allocation de ressources fixe ont un premier inconvénient dans le cas d'une répartition géographique du trafic de données non régulière. Ainsi dans les spots à faible trafic de données, comme par exemple les zones rurales à faible densité d'utilisateur, une partie des ressources en fréquence et en puissance allouées à ces spots n'est pas utilisée pour servir le faible trafic de données. Ne pouvant pas être allouées à un autre spot, ces ressources sont gaspillées. Dans les spots à forte demande de trafic de données, comme par exemple des zones urbaines à très forte densité d'utilisateur, les ressources en fréquence et en puissance allouées à ces spots ne sont pas suffisantes pour servir le trafic de données requis. Ne pouvant pas utiliser les ressources allouées à un autre spot, une partie du trafic de données ne sera pas servi.

Les systèmes à très haut débit par satellite à allocation de ressources fixe ont un deuxième inconvénient dans le cas d'une variation temporelle du trafic de données dans un spot. Cette variation peut être journalière (heures de pointe), saisonnière ou durant la durée de vie du satellite. Ainsi à certains moments la demande de trafic de données est faible, une partie des ressources en fréquence et en puissance allouées n'est pas utilisée pour servir le faible trafic de données. A d'autres moments, la demande de trafic de données est très forte et les ressources en fréquence et en puissance allouées ne sont pas suffisantes pour servir la pointe de trafic de données.

Ainsi, les systèmes à très haut débit par satellite à allocation de ressources fixe, ne sont pas adaptés à servir des profils de trafic de données variables dans l'espace (répartition géographique) et dans le temps (variations saisonnières ou journalières).

Les systèmes à très haut débit par satellite à allocation de ressources fixe ont un troisième inconvénient. Les liaisons radiofréquences en bande ka (20/30 GHz) entre le satellite et les terminaux utilisateur sont très sensibles aux phénomènes d'atténuation et d'évanouissements des signaux radio dus notamment aux intempéries (pluie, neige, grêle...). Pour maintenir les liaisons en cas d'intempéries, il est d'usage dans les systèmes à très haut débit par satellite de réduire le débit de données des liaisons perturbées. Cette technique est mise en oeuvre par l'introduction de modulation et codage adaptatifs ou ACM pour « Adaptive Coding and Modulation » en anglais. En conséquence, le trafic de données dans un spot subissant des intempéries est réduit ; il n'est pas possible dans ces systèmes à très haut débit par satellite à allocation de ressource fixe, d'allouer aux spots affectés par des intempéries plus de ressources en fréquence et en puissance pour contrer les atténuations et évanouissements.

Cette inadéquation entre les ressources en fréquence et en puissance et les variations du trafic de données pénalise la rentabilité de ces systèmes à très haut débit par satellite.

On connait notamment un exemple de méthode d'allocation de fréquence pour systèmes par satellite multifaisceaux décrite dans le brevet américain US 8634296. Cette méthode ne prend pas en compte les phénomènes d'atténuation du signal dans chaque spot de la zone de couverture ni les interférences entre faisceaux et canaux adjacents.

L'invention propose une méthode d'allocation dynamique des ressources radio d'un satellite et un système à très haut débit par satellite configuré pour mettre en oeuvre cette méthode. La méthode d'allocation est exécutée par un équipement au sol appelé Gestionnaire de Ressource Radio ou RRM pour « Radio Ressource Manager » en anglais. La méthode d'allocation selon l'invention, alloue dynamiquement dans le temps des ressources en fréquence à chaque spot de la couverture multifaisceaux en accord avec les conditions de propagation des signaux radio (en particulier les atténuations dues aux intempéries) régnant dans les spots, avec le profil de trafic de données du spot actuel et futur, avec le niveau d'interférences générées dans les faisceaux voisins. La méthode s'applique préférentiellement pour les liaisons aller descendantes, c'est-à-dire du satellite vers les terminaux utilisateur.

Contrairement aux systèmes à très haut débit par satellite selon l'art antérieur dans lesquels le plan de fréquence ou schéma de réutilisation de fréquence comprend typiquement au plus quatre couleurs, le plan de fréquence ou le schéma de réutilisation de fréquence de la méthode selon l'invention comprend des dizaines de couleurs. Par exemple, le plan de fréquence d'un système à très haut débit par satellite selon l'invention, opérant en bande Ka (17.7 GHz à 20.2 GHz), comprend 80 couleurs de 30 MHz de bande passante dans chaque polarisation. Dans chaque polarisation, les couleurs sont numérotés de 1 à 80. Il est possible d'allouer à chaque spot de zéro (pas de trafic dans le spot) à 80 sous-bandes de fréquence ou couleurs (trafic maximal dans le spot).

Une configuration d'allocation de ressources est, pour chaque spot de la couverture, le nombre et les numéros de couleurs alloués à ce spot et la puissance radio allouée à ce spot.

Le temps est découpé en intervalles de temps de durée fixe appelé tranche ou créneau de temps. A chaque créneau de temps correspond une configuration différente d'allocation de ressources. Pendant chaque créneau, le Gestionnaire de Ressource Radio établit la configuration d'allocation de ressources du prochain créneau. La configuration d'allocation de ressources est établit par la méthode d'allocation dynamique des ressources radio selon l'invention.

La méthode d'allocation selon l'invention est basée sur l'exploitation de trois ensembles d'informations pour calculer la configuration d'allocation de ressource à appliquer au prochain créneau:
- une carte des trafics ou la liste des demandes de trafic de données du prochain créneau. Il s'agit de la liste des terminaux actifs avec pour chacun sa position géographique incluant l'indentification du spot, sa demande de trafic de données, ses performances de télécommunication et toutes autres informations pertinentes pour établir la demande de service du terminal dans le prochain créneau.
- une carte des isolations représentant les performances de gain de chaque faisceau de l'antenne pour chaque point de la couverture et tenant en compte préférentiellement des conditions de dépointage de l'antenne satellite.
- une carte des atténuations. Il s'agit de la liste des terminaux actifs avec pour chacun une estimation des conditions locales de propagation, typiquement l'atténuation subie par le signal radio venant du satellite et reçu par le terminal. Cette estimation des conditions locales de propagation est soit calculée régulièrement à partir de données ou de prévisions météorologiques des précipitations et de la nébulosité locales, soit extrapolée à partir de mesures de la qualité de la liaison radio (typiquement le rapport signal à bruit ou la modulation et le codage sélectionnés par le dispositif d'ACM) faite par le terminal actif dans le créneau précèdent.

Le calcul de la configuration d'allocation de ressource consiste à définir la configuration d'allocation de ressources qui maximise le trafic de données et qui respecte l'ensemble des contraintes liées à la demande de trafic de données, aux conditions de propagation et aux niveaux d'interférences.

L'invention a pour objet une méthode d'allocation de canaux fréquentiels, parmi une liste de canaux, à une pluralité de terminaux dans un système de télécommunications par satellite multi-faisceaux comprenant un satellite et au moins une station d'alimentation, le satellite comprenant au moins un amplificateur et au moins une antenne, la méthode comprenant les étapes de :
- Etablir une liste de terminaux actifs et, pour chaque terminal,
- Déterminer un premier rapport signal à bruit SNRₙ pour la liaison entre une station d'alimentation et le terminal via le satellite, au moins à partir d'une estimée de l'atténuation subie par le signal en fonction des conditions de propagation du signal,
- Retirer le terminal de la liste de terminaux actifs si le premier rapport signal à bruit est inférieur à un seuil prédéterminé,
- Calculer la puissance radiofréquence nécessaire de l'amplificateur associé au faisceau éclairant le terminal pour obtenir ledit premier rapport signal à bruit,
- Retirer le terminal de la liste de terminaux actifs si la somme des puissances radiofréquences nécessaires de tous les amplificateurs du satellite dépasse un seuil de capacité de puissance maximum,
- Pour chaque canal sélectionné dans la liste de canaux fréquentiels,
   i. Calculer un rapport signal à interférences SIR_{c} pour ledit terminal dans le canal sélectionné,
   ii. Si la somme du premier rapport signal à bruit SNRₙ et du rapport signal à interférences SIR_{c} est inférieure audit seuil prédéterminé, allouer le canal sélectionné audit terminal,
   iii. Sinon, sélectionner un autre canal.

Selon un aspect particulier de l'invention, le premier rapport signal à bruit SNRₙ est déterminé à partir d'un rapport signal à bruit plus interférences SNIRₛ sur une liaison d'alimentation entre une station d'alimentation et le satellite et d'un second rapport signal à bruit SNR_{d} pour la liaison descendante entre le satellite et le terminal.

Selon un aspect particulier de l'invention, le second rapport signal à bruit SNR_{d} est déterminé au moins à partir de la puissance isotrope rayonnée équivalente PIREᵤ émise par une antenne du satellite en direction dudit terminal, d'une estimée de l'atténuation Aᵤ subie par le signal en fonction des conditions de propagation du signal.

Selon un aspect particulier de l'invention, la puissance radiofréquence nécessaire de l'amplificateur associé au faisceau éclairant le terminal est déterminée au moins à partir d'un gain de l'antenne du satellite générant ledit faisceau dans la direction du terminal.

Selon une variante particulière de l'invention, les faisceaux générés par le satellite sont fixes et les gains des antennes du satellite sont pré-calculés et stockés dans une base de données.

Selon une autre variante particulière de l'invention, les faisceaux générés par le satellite sont reconfigurables et les gains des antennes du satellite sont déterminés par un module de calcul de diagrammes d'antennes.

Selon un aspect particulier de l'invention, les puissances radiofréquences nécessaires de tous les amplificateurs du satellite sont calculées pour chaque terminal auquel a été alloué un canal fréquentiel.

Selon un aspect particulier de l'invention, le seuil prédéterminé est un rapport signal à bruit requis pour assurer un niveau donné de qualité de service.

Selon un aspect particulier de l'invention, les conditions de propagation du signal sont déterminées à partir de données météorologiques.

Selon un aspect particulier de l'invention, les étapes de la méthode sont itérées en faisant varier à chaque itération un créneau temporel alloué aux terminaux pour communiquer.

L'invention a aussi pour objet un gestionnaire de ressources radio configuré pour mettre en oeuvre la méthode d'allocation de canaux fréquentiels selon l'invention et un système de télécommunications par satellite comprenant un satellite multi-faisceaux, au moins une station d'alimentation pour établir une liaison de communication entre un réseau et une pluralité de terminaux, via le satellite, et un gestionnaire de ressources radio selon l'invention.

D'autres caractéristiques et avantages de la présente invention apparaîtront mieux à la lecture de la description qui suit en relation aux dessins annexés qui représentent :
- La figure 1, un schéma d'un système de télécommunication par satellite multifaisceaux,
- La figure 2, un exemple de plan de fréquence d'un système à très haut débit par satellite selon l'art antérieur,

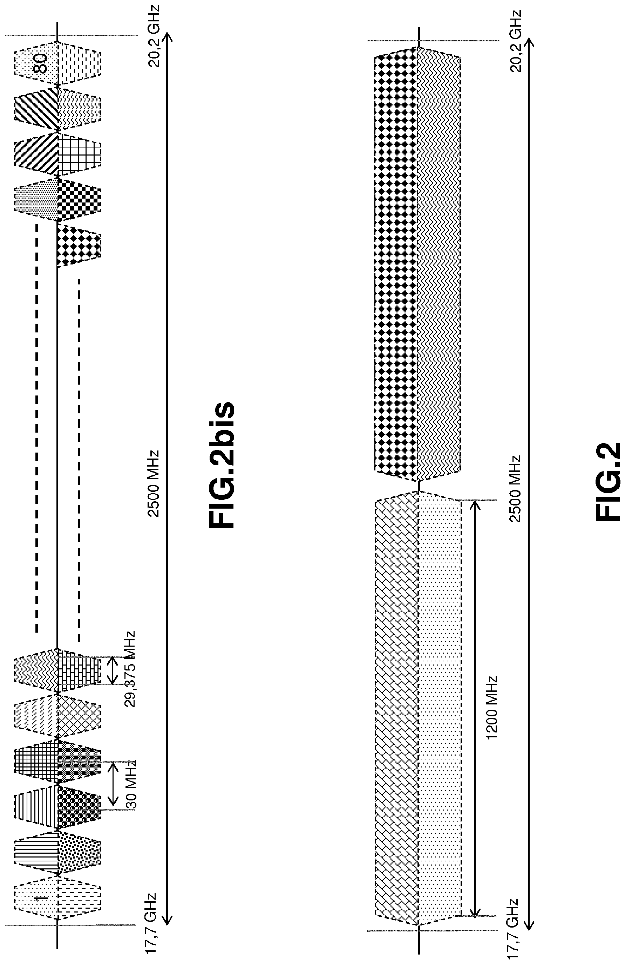

- La figure 2bis, un exemple de plan de fréquence d'un système à très haut débit par satellite selon l'invention,

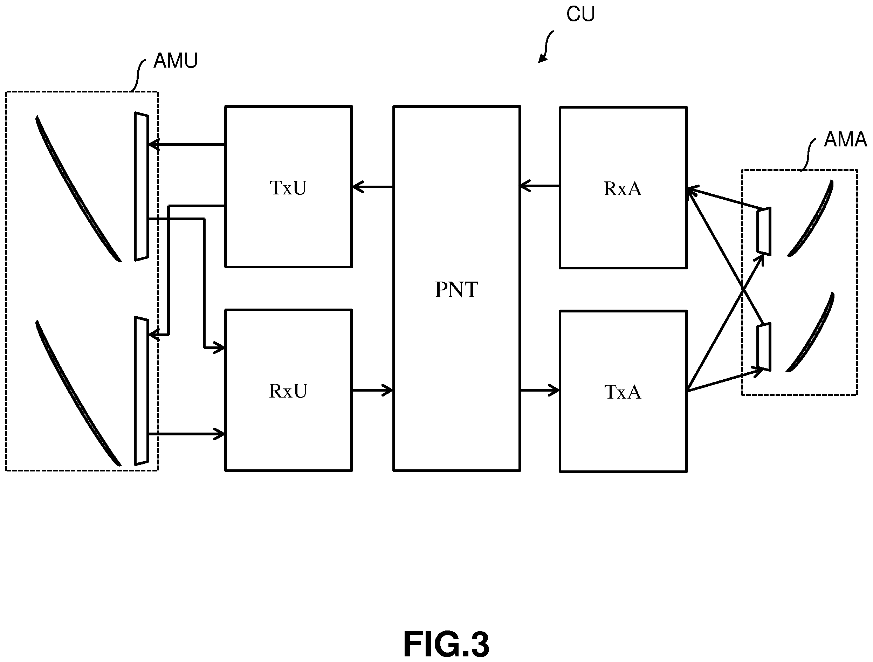

- La figure 3, un schéma d'un exemple de charge utile d'un satellite à très haut débit apte à mettre en œuvre la méthode d'allocation de ressources selon l'invention,

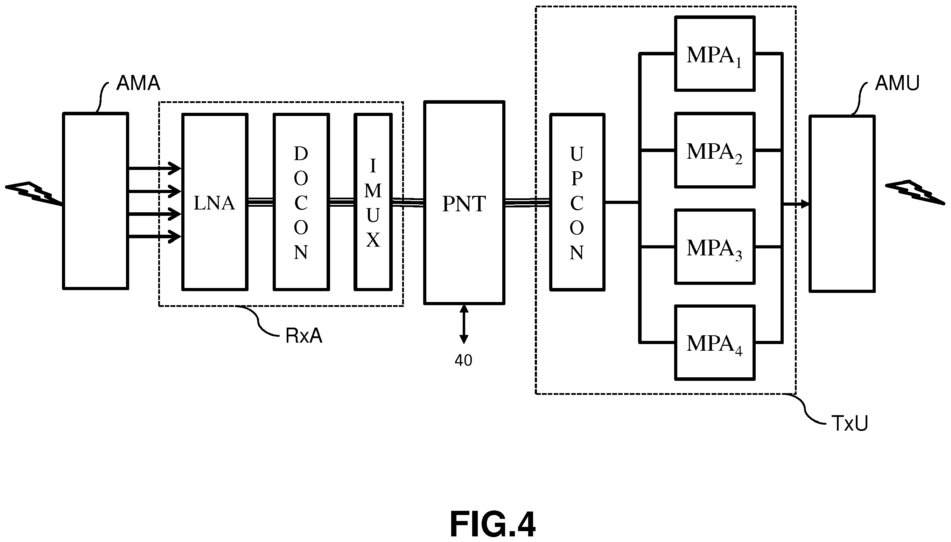

- La figure 4, un schéma d'un exemple de répéteur aller de la charge utile d'un satellite à très haut débit apte à mettre en œuvre la méthode d'allocation de ressources selon l'invention,

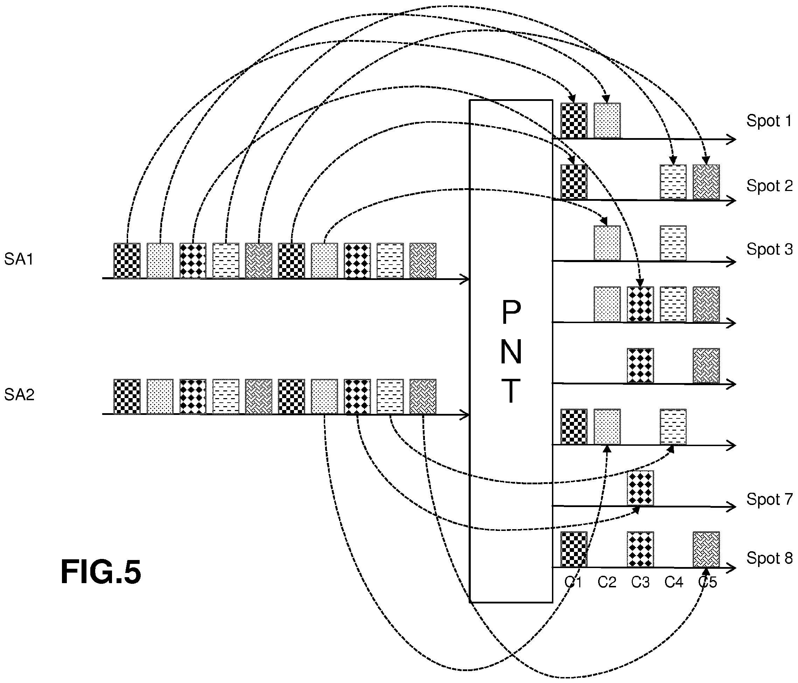

- La figure 5, un schéma de principe illustrant le fonctionnement d'un processeur numérique transparent inclus dans le répéteur aller de la charge utile d'un satellite à très haut débit apte à mettre en œuvre la méthode d'allocation de ressources selon l'invention,

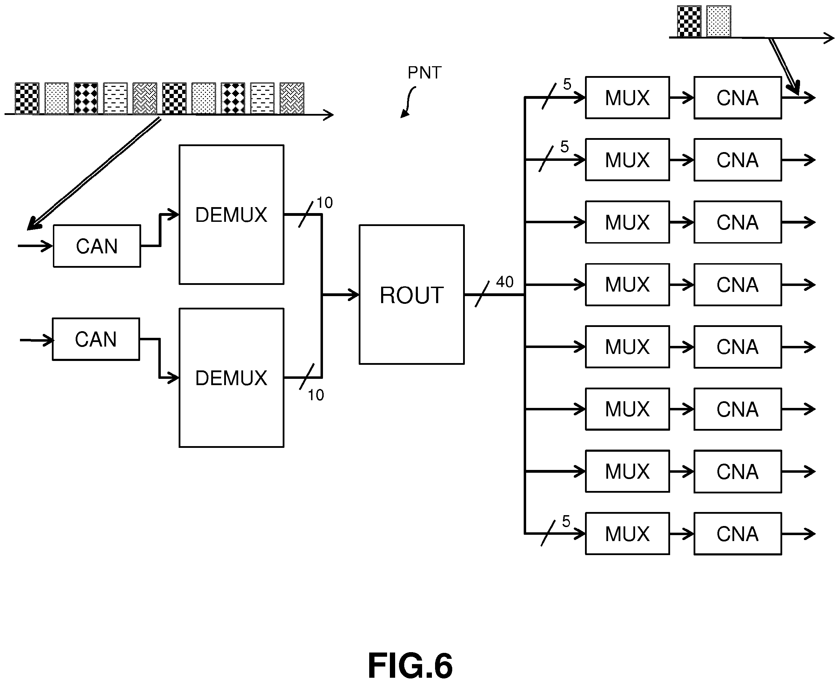

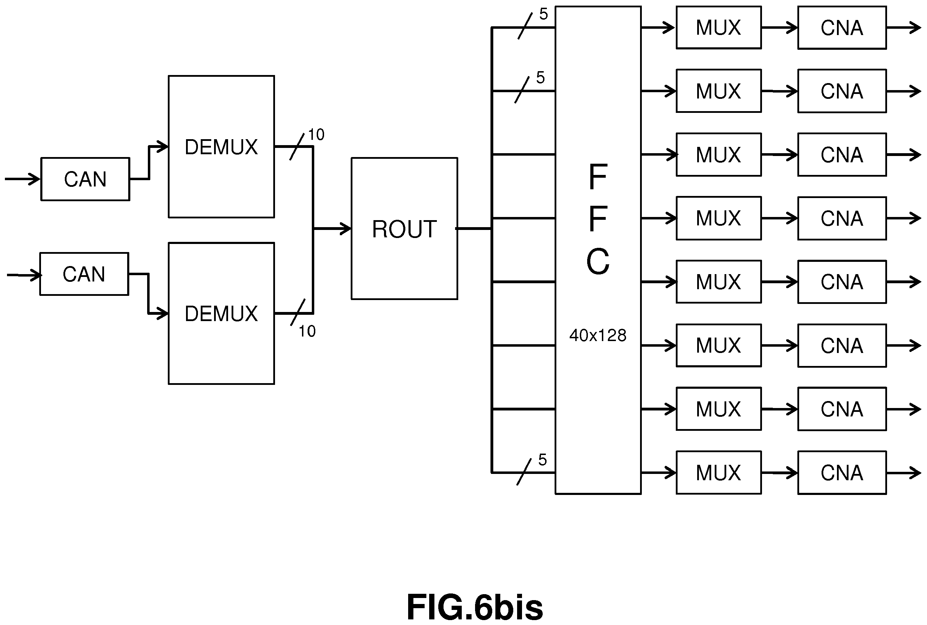

- La figure 6, un schéma d'un premier exemple d'architecture d'un processeur numérique transparent,
- La figure 6bis, un schéma d'un second exemple d'architecture d'un processeur numérique transparent,

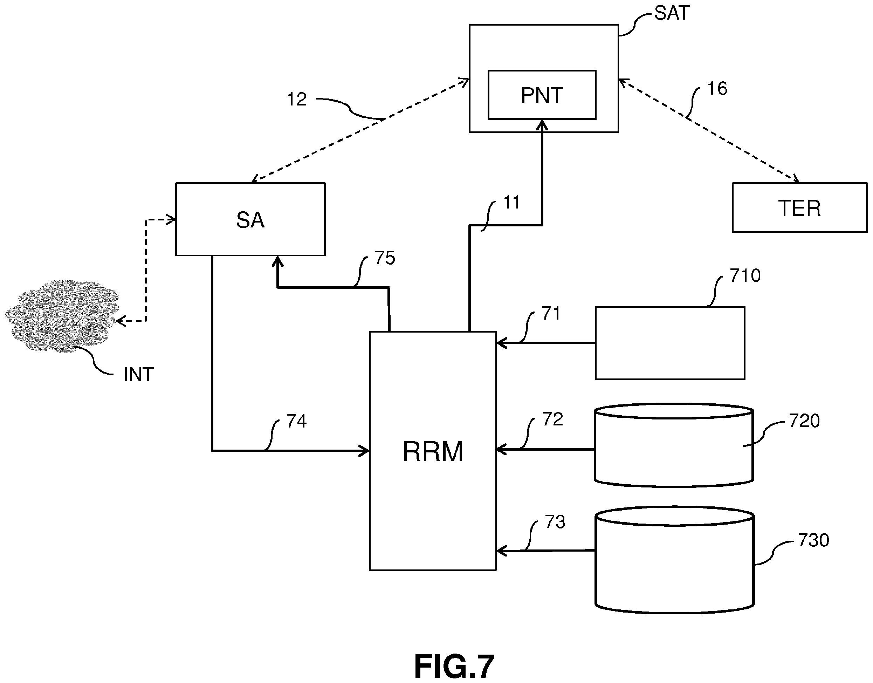

- La figure 7, un schéma d'un exemple d'architecture d'un système à très haut débit par satellite selon l'invention,

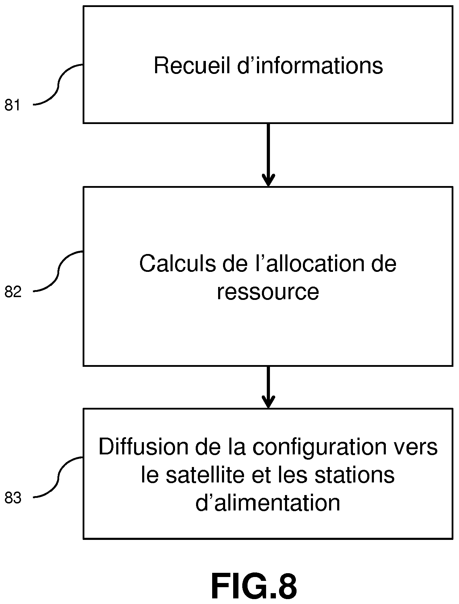

- La figure 8, un organigramme d'un exemple d'enchainement des actions mises en œuvre dans l'établissement d'une configuration d'allocation selon l'invention,

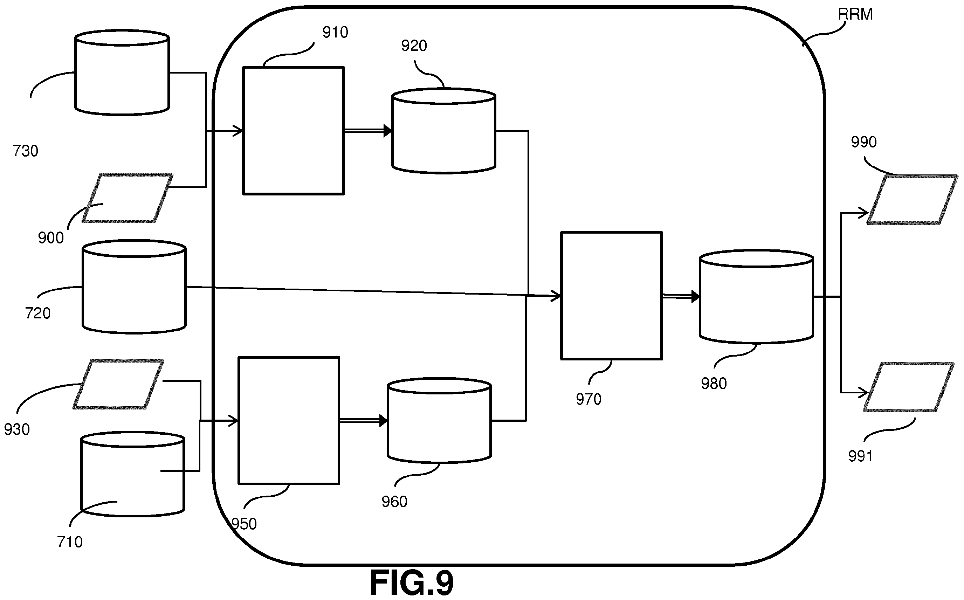

- La figure 9, un schéma fonctionnel d'un gestionnaire de ressources radio selon l'invention,

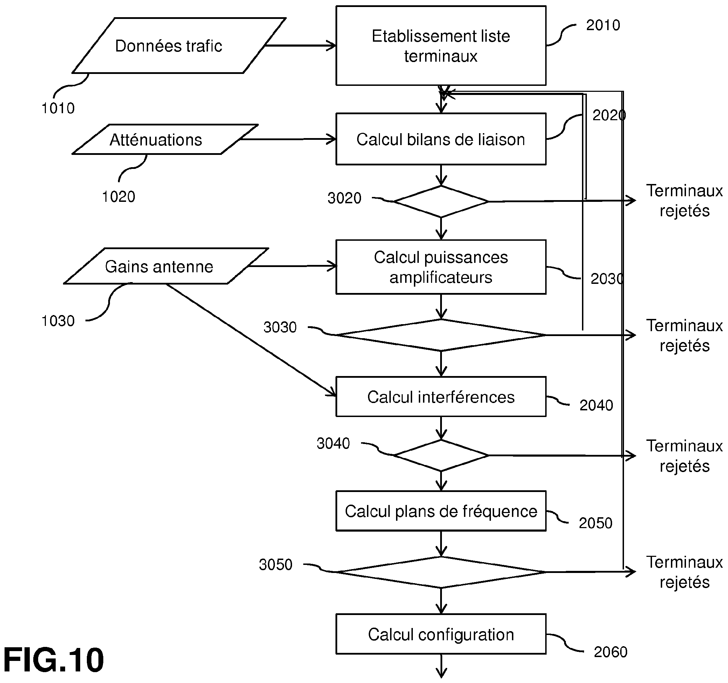

- La figure 10, un organigramme détaillant les étapes de mise en œuvre de la méthode d'allocation de ressources radio selon l'invention,

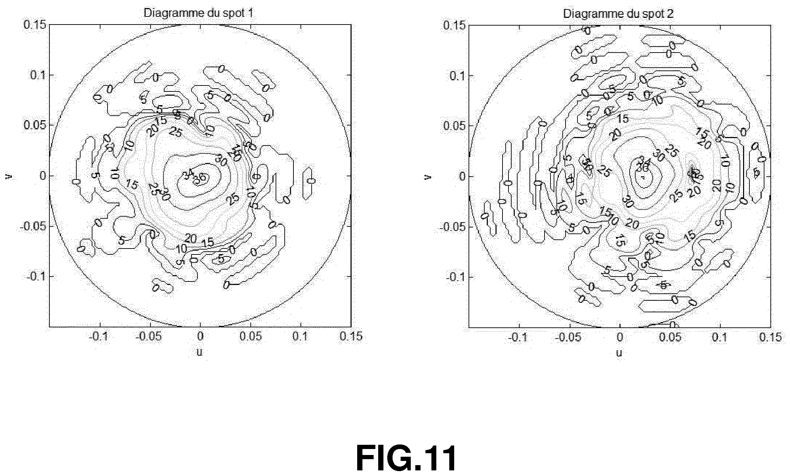

- La figure 11, deux exemples de diagrammes de rayonnement d'antenne dans deux spots différents,

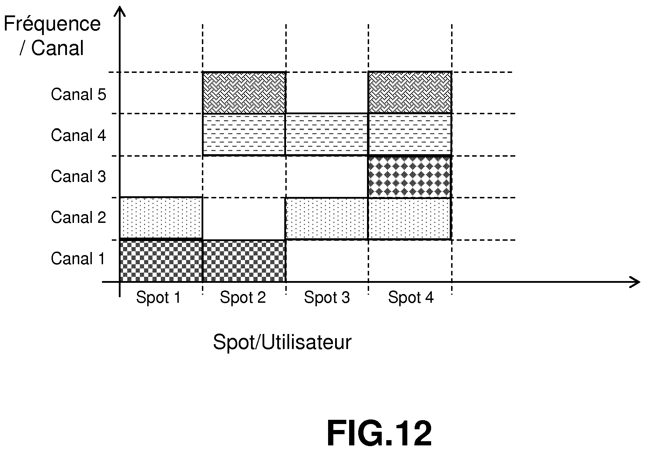

- La figure 12, un diagramme temps/fréquence illustrant un exemple d'allocation de canaux fréquentiels à plusieurs spots,

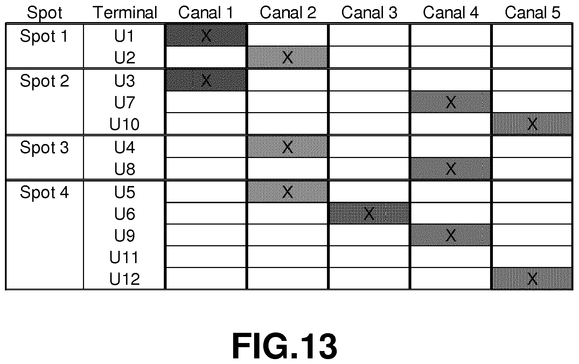

- La figure 13, un diagramme temps/fréquence illustrant un exemple d'allocation de canaux fréquentiels à différents utilisateurs de différents spots,

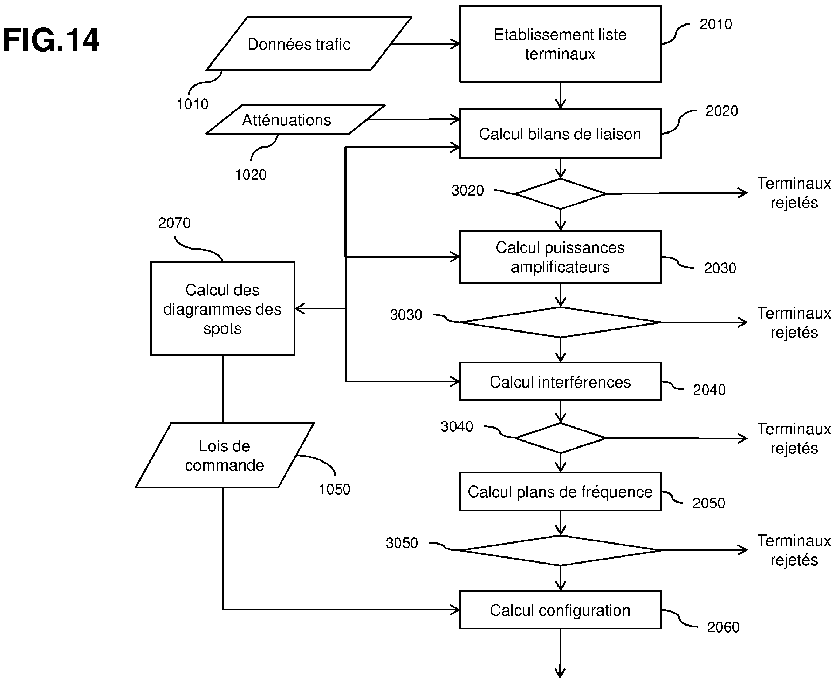

- La figure 14, un organigramme détaillant les étapes de mise en œuvre d'une variante de réalisation de la méthode d'allocation selon l'invention.

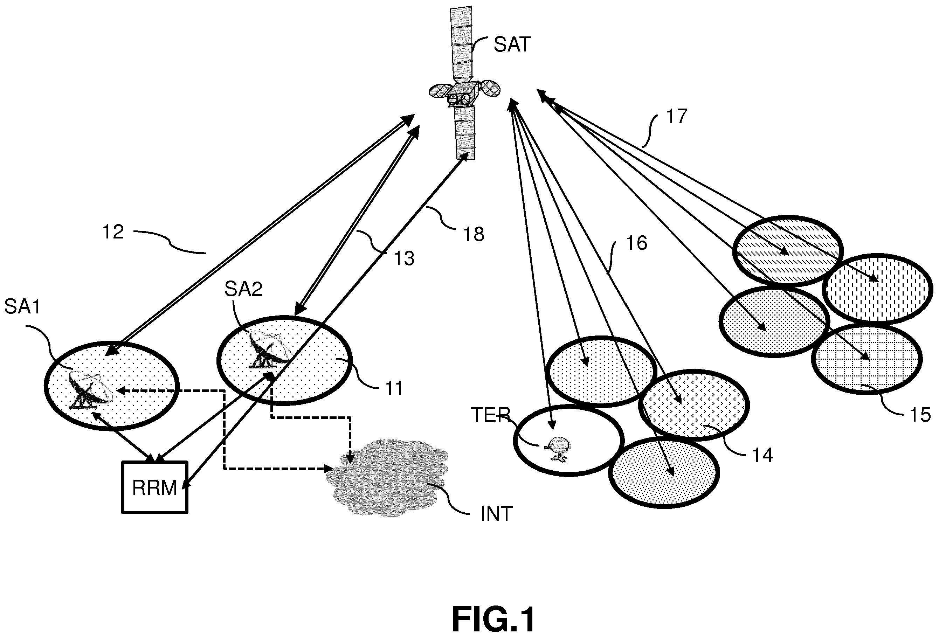

La figure 1 représente un système de télécommunications large bande par satellite multifaisceaux pour l'accès au réseau Internet INT. Un tel système comprend un satellite SAT, au moins une station d'alimentation SA1,SA2 encore appelée « feeder station » ou « gateway » en anglais et plusieurs terminaux utilisateurs TER situés dans différentes cellules ou spots 14,15. Le système comprend en outre un gestionnaire de ressources radio RRM apte à communiquer d'une part avec les stations d'alimentation SA1,SA2 et d'autre part avec le satellite SAT, via par exemple une liaison de télécommande 18.

Une station d'alimentation SA1,SA2 comporte un dispositif d'émission et de réception radiofréquence pour communiquer avec les terminaux utilisateurs TER via le satellite SAT au travers des liaisons bidirectionnelles 12,13,16,17. Une liaison d'une station d'alimentation SA1 vers les terminaux utilisateurs TER via le satellite SAT est appelée liaison aller (en anglais : forward link). Une liaison d'un terminal utilisateur TER vers les stations d'alimentations SA1,SA2 via le satellite SAT est appelée liaison retour (en anglais : return link). Les liaisons 12,13 entre une station d'alimentation SA1,SA2 et le satellite SAT sont appelées liaisons d'alimentation ou de contribution (en anglais : feeder links). Les liaisons d'alimentation 12,13 sont bidirectionnelles et constituées de liaisons aller dans un sens montant d'une station d'alimentation SA1,SA2 vers le satellite SAT et de liaisons retour dans un sens descendant du satellite SAT vers une station d'alimentation SA1,SA2. Les liaisons 16,17 entre l'ensemble des terminaux utilisateurs TER et le satellite SAT sont appelées liaisons utilisateurs (en anglais : user links). Les liaisons utilisateurs 16,17 sont bidirectionnelles et constituées de liaisons retour dans le sens montant des utilisateurs TER vers le satellite SAT et de liaisons aller dans le sens descendant du satellite SAT vers les utilisateurs TER. Les stations d'alimentation SA1,SA2 sont reliées à l'équipement RRM contenant le gestionnaire des ressources radio du satellite (Radio Resource manager en anglais). Les stations d'alimentation SA1,SA2 sont reliées aux réseaux terrestres de télécommunications INT tel que le réseau Internet. Dans l'exemple de la figure 1, il y a deux stations d'alimentation SA1,SA2 et 8 faisceaux éclairant 8 cellules utilisateurs 14,15.

Dans un système de télécommunication tel que décrit à la figure 1, les terminaux utilisateurs TER partagent la bande de fréquence (par exemple la bande Ka de 17,3 à 20,2 GHz) entre eux pour communiquer.

La figure 2 représente un exemple de plan de fréquence pour les liaisons utilisateurs selon une méthode d'allocation de l'art antérieur. Typiquement, un tel plan de fréquence comprend au plus deux canaux dans deux polarisations différentes soit quatre couleurs différentes.

La figure 2bis représente un exemple de plan de fréquence pour les liaisons utilisateurs selon la méthode d'allocation proposée par l'invention. Un tel plan de fréquence comporte plusieurs dizaines de canaux, par exemple 80 canaux de 30 MHz de bande passante chacun et dans deux polarisations différentes. Dans chaque polarisation, les canaux sont numérotés de 1 à 80. Il est possible d'allouer à chaque spot de zéro (pas de trafic dans le spot) à 80 sous-bandes de fréquence ou couleurs (trafic maximal dans le spot).

La figure 3 représente un exemple de charge utile CU d'un satellite large bande SAT d'un système de télécommunication selon l'invention. Une telle charge utile CU comprend un premier système d'antennes d'émission et de réception AMU aptes à générer une pluralité de faisceaux pour éclairer une pluralité de cellules utilisateurs ou spots 14,15. Les faisceaux peuvent être fixes ou dynamiques. La charge utile comprend aussi un second système d'antennes AMA apte à générer une pluralité de faisceaux pour éclairer une pluralité de cellules 11 contenant chacune une station d'alimentation SA2. Les systèmes d'antennes AMU,AMA comprennent, par exemple, une antenne pour chaque faisceau à générer. La charge utile CU comprend aussi une chaine de réception RxU pour amplifier et transposer en fréquence les signaux radio reçus par le premier système d'antennes AMU. La charge utile CU comprend aussi une chaine d'émission TxU pour transposer en fréquence et amplifier en puissance les signaux radio destinés à être transmis par le premier système d'antennes AMU vers les terminaux utilisateurs. La charge utile CU comprend aussi un processeur numérique transparent PNT, une chaine de réception RxA pour amplifier et transposer en fréquence les signaux radio reçus par le second système d'antennes AMA, une chaine d'émission TxA pour transposer en fréquence et amplifier en puissance les signaux radio destinés à être transmis par le second système d'antennes AMA vers les stations d'alimentation SA1,SA2. Dans un mode de réalisation particulier, le premier système d'antennes d'émission et de réception AMU comprend une ou plusieurs antennes actives.

Les systèmes d'antennes AMA,AMU, la chaine de réception RxA, le processeur PNT et la chaine de transmission TxU constituent un répéteur aller. Les systèmes d'antennes AMA,AMU, la chaine de réception RxU, le processeur PNT et la chaine de transmission TxA constituent un répéteur retour.

La figure 4 représente un exemple de répéteur aller d'une charge utile CU d'un satellite SAT. Les éléments déjà décrits à la figure 3 portent les mêmes références sur la figure 4.

Un tel répéteur comprend une chaine de réception RxA qui comprend par exemple un ou plusieurs amplificateurs faible bruit LNA, un ou plusieurs convertisseurs abaisseurs de fréquence DOCON et un ou plusieurs filtres démultiplexeurs large bande IMUX. Le répéteur comprend aussi une chaine d'émission TxU qui comprend par exemple un ou plusieurs convertisseurs élévateurs de fréquence UPCON et un ou plusieurs amplificateurs multiports MPA₁, MPA₂, MPA₃, MPA₄. Chaque sortie des amplificateurs multiports MPA₁, MPA₂, MPA₃, MPA₄ est connectée à un élément rayonnant d'une antenne du premier système d'antennes AMU. La formation de faisceau est réalisée dans le processeur numérique transparent PNT.

La figure 5 illustre le fonctionnement d'un processeur numérique transparent inclus dans le répéteur aller de la charge utile d'un satellite à très haut débit apte à mettre en œuvre la méthode d'allocation de ressources selon l'invention.

Selon l'exemple de la figure 5, le répéteur aller reçoit les signaux de deux stations d'alimentation SA1,SA2 et délivre en sortie des signaux vers huit cellules utilisateur ou spots tel que schématisé à la figure 1. Le plan de fréquences de la liaison utilisateur aller est constitué de cinq bandes de fréquence ou couleurs C1,C2,C3,C4,C5. Le plan de fréquence de la liaison d'alimentation est constitué de 10 sous-bandes de fréquences ayant chacune une bande passante égale à la bande passante d'une couleur. Dans cet exemple, le processeur numérique transparent PNT a deux entrées correspondant chacune à une station d'alimentation et huit sorties correspondant chacune à une cellule utilisateur. Le signal sur chaque entrée du processeur PNT est constitué d'un multiplex fréquentiel d'au moins 10 sous-bandes ou couleurs. Le signal sur chaque sortie du processeur PNT est constitué d'un multiplex de fréquentiel d'au plus cinq couleurs. Le processeur PNT comprend au moins un filtre numérique programmable en fréquence centrale et en bande passante en entrée et apte à sélectionner ou démultiplexer les sous bandes présentes sur les entrées du processeur. Le processeur PNT comprend aussi un commutateur ou un routeur apte à router une sous-bande depuis une entrée du processeur vers une sortie du processeur et au moins un filtre numérique programmable en fréquence centrale et en bande passante en sortie apte à multiplexer les sous bandes sur les sorties du processeur PNT.

Sur la figure 5, on a représenté un exemple de routage effectué par un processeur PNT en application d'une allocation des ressources fréquentielles aux faisceaux utilisateur décidée par le gestionnaire de ressource radio RRM. Selon cet exemple, au spot ou faisceau utilisateur numéro 1 ont été allouées les couleurs C1 et C2, présentes sur la sortie 1 du processeur PNT ; au spot 2 ont été allouées les couleurs C1, C4 et C5, présentes sur la sortie 2 du processeur PNT. Ces bandes de fréquence ou couleurs sont transmises en entrée 1 du processeur PNT par la liaison d'alimentation entre la station d'alimentation SA1 et le satellite SAT. Au spot 8 ont été allouées les couleurs C1, C3 et C5, présentes sur la sortie 8 du processeur PNT; ces couleurs sont transmises en entrée 2 du processeur PNT par la liaison d'alimentation entre la station d'alimentation SA2 et le satellite SAT.

La figure 6 représente un exemple de réalisation d'un processeur numérique transparent PNT ayant deux entrées et huit sorties. Sur chaque entrée, on retrouve un convertisseur analogique numérique CAN qui échantillonne et convertit sous forme numérique le signal radio issu des stations d'alimentation et constitué d'un multiplex fréquentiel de 10 sous-bandes. Ce signal numérique est destiné à un démultiplexeur DEMUX à une entrée et dix sorties dont le rôle est de filtrer chaque sous-bande, la convertir en fréquence et la diriger vers une entrée d'un routeur ROUT. Chaque filtre est programmable en bande passante et en fréquence centrale. Le routeur ROUT dirige chacune de ses vingt entrées vers une de ses quarante sorties. Les sorties du routeur ROUT sont connectées à huit multiplexeurs de fréquence MUX à cinq entrées et une sortie dont le rôle est de reconstituer un multiplex de fréquence avec au plus les cinq sous-bandes présentes sur ses cinq entrées. Chaque multiplexeur MUX est programmable en cohérence avec la programmation des filtres des démultiplexeurs DEMUX. Un multiplexeur MUX est connecté en sortie à un convertisseur numérique analogique CNA qui convertit les signaux numériques en signaux radio destiné aux spots utilisateur.

La figure 6bis représente une variante de réalisation du processeur numérique transparent PNT décrit à la figure 6, dans laquelle un réseau de formation de faisceau par le calcul FFC est implanté entre le routeur ROUT et les multiplexeurs MUX. Dans ce mode de réalisation, les sorties du processeur PNT correspondent aux éléments rayonnants d'une antenne active multifaisceaux.

La figure 7 schématise, fonctionnellement, un exemple de système de télécommunications par satellite selon l'invention. Le système selon l'invention met en œuvre une méthode d'allocation de ressources radio particulière qui est implémentée par le gestionnaire de ressources radio RRM. Cet équipement interagit avec une base de données utilisateurs 730 qui contient une information relative à la position géographique de chaque terminal utilisateur, ainsi que des informations sur les caractéristiques et performances radio de chaque terminal utilisateur et le niveau de qualité de service souscrit par chaque utilisateur. Toutes ces informations sont fournies au gestionnaire de ressources radio RRM via un canal de communication 73. Par ailleurs, le système comprend également une base de données satellite 720 qui contient les diagrammes des antennes du satellite SAT permettant de déduire les gains d'antenne dans chaque direction pointée. Ces informations sont fournies au gestionnaire de ressources radio via un canal de communication 72. Le système comprend également une base de données météo 710 qui contient des informations permettant de déterminer le niveau d'atténuation du signal sur la liaison utilisateur 16 en fonction des conditions météorologiques en cours et prévisionnelles dans les différentes cellules éclairées par les faisceaux d'antenne. Ces informations sont fournies au gestionnaire de ressources radio RRM via un canal de communication 71. Le gestionnaire de ressources radio RRM communique par ailleurs avec les stations d'alimentation SA et le satellite SAT.

Chaque station d'alimentation SA transmet par un canal de communication 74 au gestionnaire de ressources radio RRM des informations sur l'état du trafic dans chacun des spots utilisateur. Ces informations incluent au moins pour chaque liaison active : l'identité du terminal, la qualité de service requise pour le terminal, le rapport signal à bruit, l'atténuation atmosphérique, le taux de codage utilisé sur la liaison. Ces informations incluent également pour chaque liaison à établir dans une prochaine trame : l'identité du terminal et la qualité de service requise par le terminal.

Le gestionnaire de ressources radio RRM transmet par un canal de communication 11, qui peut être par exemple la liaison de télécommande du satellite SAT, la configuration à appliquer aux équipements radio de la charge utile CU, en particulier des informations destinées à la programmation du processeur numérique transparent PNT.

Le gestionnaire de ressources radio RRM transmet par un canal de communication 75, aux stations d'alimentations SA, des informations sur le trafic à établir à la prochaine trame dans chacun des spots utilisateur et des informations sur la configuration du satellite résultant de l'allocation de ressources décidée par le gestionnaire de ressources radio RRM.

Le gestionnaire de ressources radio RRM peut être implémenté par un processeur embarqué ou non ou par un dispositif spécifique. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gâte Array »). Le gestionnaire de ressources radio RRM peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

La figure 8 donne un exemple de la séquence d'étapes du gestionnaire de ressource radio RRM d'un système d'accès Internet par satellite mettant en œuvre la présente invention. La séquence d'étapes décrite à la figure 8 est réalisée à la fin de chaque trame pour appliquer une nouvelle allocation de ressource pour la trame suivante. La première étape 81 consiste en le recueil des données et des informations nécessaires aux calculs de la configuration d'allocation. La deuxième étape 82 comprend le calcul de la configuration d'allocation pour la prochaine trame. L'étape suivante 83 comprend la diffusion des informations de configuration vers le satellite et les stations d'alimentation.

La figure 9 schématise un exemple de gestionnaire de ressources radio RRM selon l'invention.

Le gestionnaire de ressources radio RRM reçoit en entrée les caractéristiques des terminaux utilisateurs mémorisées dans la base de données utilisateur 730, la liste 900 des liaisons utilisateur actives pendant la trame précédente, une mesure 930 des rapports signal à bruit et/ou des taux de modulation et codage des liaisons utilisateur actives, ainsi que les données météo dans la zone de couverture du satellite mémorisées dans la base de données météo 710.

Un premier module de calcul 910 est configuré pour élaborer une carte des trafics, c'est-à-dire une liste de liaisons utilisateurs à établir ainsi que leurs caractéristiques. Cette carte des trafics est stockée dans une base de données 920.

Un second module de calcul 950 est configuré pour estimer le niveau d'atténuation atmosphérique ou plus généralement le niveau de dégradations subi par chaque liaison utilisateur à établir. Ces estimations sont stockées dans une base de données 960.

Un troisième module de calcul 970 est configuré pour déterminer l'allocation de ressources radio à chaque liaison utilisateur à établir et stocker la configuration d'allocation de ressources déterminée dans une base de données 980. Le troisième module de calcul reçoit les données sauvegardées dans les bases de données 920 et 960 ainsi que dans la base de données 720 des caractéristiques des antennes du satellite.

A partir de cette configuration d'allocation de ressources, le trafic 990 dans la trame suivante est établi. Autrement dit, la liste des liaisons actives avec leurs caractéristiques est établie ainsi que la configuration 991 matérielle et logicielle du satellite SAT et des stations d'alimentation SA pour mettre en œuvre cette configuration d'allocation de ressources.

La figure 10 représente un organigramme détaillant les étapes de mise en œuvre de la méthode d'allocation de ressources radio selon l'invention. Cette méthode est mise en œuvre par un gestionnaire de ressources radio RRM. Elle concerne l'allocation de bandes de fréquences pour les liaisons aller des stations d'alimentation vers les terminaux utilisateur.

Un objectif de la méthode selon l'invention est de maximiser le nombre de terminaux utilisateurs actifs simultanément avec les contraintes suivantes. Une première contrainte est de ne pas dépasser la puissance radiofréquence totale disponible dans le satellite SAT ainsi que la puissance radiofréquence maximale de chaque amplificateur multiport MPA. Une autre contrainte est de ne pas dépasser la capacité de traitement du processeur numérique transparent PNT. Une autre contrainte est de ne pas dépasser la bande passante des liaisons d'alimentation. Une autre contrainte est d'établir toutes les liaisons utilisateur avec un rapport signal à bruit plus interférences supérieur à celui requis pour assurer une qualité de service prédéterminée pour chaque liaison. Ainsi, un utilisateur sera servi si le rapport signal à bruit plus interférences réalisé sur la liaison utilisateur est supérieur au rapport signal à bruit requis par le niveau de qualité de service.

La méthode est exécutée itérativement pour chaque nouveau créneau de temps alloué aux utilisateurs pour communiquer.

La première étape 2010 de la méthode d'allocation de ressources consiste à établir une liste des terminaux qui seront actifs dans la prochaine trame et à définir l'ordre d'allocation à partir de données 1010 contenues dans la carte des trafics stockée dans la base de donnée 920 de la figure 9. L'ordre d'allocation de ressources aux terminaux peut être aléatoire, peut suivre des critères de priorité ou résulter d'un algorithme d'ordonnancement comme l'algorithme du tourniquet pondéré (Weighted Robin Round en anglais).

Les étapes suivantes de la méthode sont exécutées pour chaque terminal de la liste établie à l'étape 2010, dans un ordre prédéterminé par exemple en fonction de priorités.

Dans une deuxième étape 2020, on calcule un bilan de liaison nominal pour le terminal courant auquel on souhaite allouer des ressources de communication. Le calcul d'un bilan de liaison comprend la détermination d'un rapport signal à bruit SNRₙ réalisé en l'absence d'interférence sur la liaison entre une station d'alimentation et le terminal. L'inverse du rapport signal à bruit SNRₙ est égal à la somme des inverses d'un rapport signal à bruit plus interférences SNIRₛ réalisé sur la liaison d'alimentation et dans le répéteur du satellite et d'un rapport signal à bruit SNR_{d} sur la liaison descendante du satellite au terminal : SNRₙ⁻¹ = SNIRₛ⁻¹ + SNR_{d}⁻¹.

Le rapport signal à bruit SNR_{d} peut être calculé à partir de l'équation du bilan de liaison : SNR_{d} = PIREᵤ . (G/T)ᵤ . Lᵤ. Aᵤ. 1/(k.B).
PIREᵤ est la Puissance Isotrope Rayonnée Equivalente émise en direction du terminal utilisateur u par l'antenne générant le faisceau éclairant le spot contenant le terminal utilisateur u. La valeur de la puissance PIREᵤ est définie pour chaque classe de terminal et de service en fonction des besoins de l'utilisateur. Il peut s'agir par exemple de la puissance PIRE par ciel clair nécessaire pour fournir un service donné à une classe de terminal.
(G/T)ᵤ est le facteur de mérite du terminal, qui est obtenu à partir de la base de données 730,
Lᵤ sont les pertes de propagation en espace libre entre le satellite et le terminal,
Aᵤ sont les atténuations subies par le signal sur la liaison descendante entre le satellite et le terminal. Les atténuations Aᵤ sont contenues dans une carte des atténuations 1020 et sont déterminées à partir de données météorologiques
k est la constante de Boltzmann et B la bande passante du canal. L'inverse du rapport signal à bruit plus interférences SNIRₛ est la somme des inverses du rapport signal à bruit réalisé sur la liaison d'alimentation SNRₐ et du rapport signal à intermodulations SIRₘ: : SNIRₛ⁻¹ = SNRₐ⁻¹ + SIRₘ⁻¹. Ces intermodulations sont générées par les amplificateurs multiport MPA à bord du satellite. L'évaluation du rapport signal à intermodulations SIRₘ est faite à partir de la connaissance du point de fonctionnement (c'est à dire le recul de puissance ou back-off en anglais) des amplificateurs multiport MPA; le point de fonctionnement est habituellement accessible par la télémesure du satellite.
Le rapport signal à bruit SNRₐ de la liaison d'alimentation peut être calculé à partir de l'équation du bilan de liaison : SNRₐ = PIRE_{g} . (G/T)ₛₐₜ . Lₐ . Aₐ . 1/(k.B).
(G/T)ₛₐₜ est le facteur de mérite du satellite en direction de la station d'alimentation qui est connu par construction,
Lₐ sont les pertes de propagation en espace libre entre la station d'alimentation et le satellite,
Aₐ sont les atténuations subies par le signal sur la liaison montante entre la station d'alimentation et le satellite. Les atténuations Aₐ sont contenues dans une carte des atténuations 1020 ou estimées par extrapolation à partir de mesures des atténuations sur la liaison d'alimentation descendante faites dans la station d'alimentation.
PIRE_{g} est la Puissance Isotrope Rayonnée Equivalente émise en direction du satellite par l'antenne de la station d'alimentation du signal destiné à l'utilisateur u. La valeur de PIRE_{g} est déterminée à partir de la valeur de PIREᵤ en inversant la formule : PIREᵤ = PIRE_{g} . Gₛₐₜ . Lₐ . Aₐ.
Gₛₐₜ est le gain du satellite, il est égal au gain de l'antenne du satellite en direction de la station d'alimentation qui est connu par construction, multiplié par le gain du répéteur du satellite qui est connu par la télémesure du satellite, multiplié par le gain de l'antenne du satellite en direction de l'utilisateur u qui est sauvegardé dans la base de données antenne 720. Dans l'étape suivante 3020, on compare le rapport signal à bruit calculé SNRₙ à un rapport signal à bruit requis SNRᵣ. Si SNRₙ est inférieur à SNRᵣ alors le terminal associé est rejeté de la liste et on passe au terminal suivant. Dans le cas contraire, on poursuit à l'étape 2030.

Dans une étape suivante 2030, on calcule la puissance radio nécessaire, pour l'amplificateur multiport associé au faisceau éclairant le spot dans lequel se trouve le terminal utilisateur, pour pouvoir obtenir une puissance isotrope rayonnée équivalente PIREᵤ qui correspond à celle utilisée pour calculer le rapport signal à bruit SNR_{d} sur la liaison descendante entre le satellite et le terminal. La puissance radio nécessaire est calculée notamment à partir du gain de l'antenne 1030 associée au spot contenant le terminal, dans la direction du terminal et à partir de la puissance isotrope rayonnée équivalente PIREᵤ qui est égale au produit de la puissance radio par le gain d'antenne. Optionnellement le gain d'antenne peut être divisé par les pertes entre la sortie de l'amplificateur et l'entrée de l'antenne. Les gains des antennes 1030 sont contenus dans la base de données antenne décrite à la figure 9.

Le calcul de puissance radio nécessaire est réalisé pour tous les terminaux pour lesquels une allocation a déjà été effectuée, dans la trame courante. On calcule ensuite la somme des puissances radio de tous les amplificateurs MPA de la charge utile du satellite.

Dans une étape 3030, on compare la somme des puissances radio calculée à un seuil de capacité de puissance maximum. Si le seuil est dépassé, le terminal courant est rejeté et on en conclue que toute la puissance disponible dans la charge utile est utilisée pour la trame courante. On passe alors à la trame suivante.

Dans le cas contraire, on passe à l'étape suivante 2040 qui consiste à calculer un rapport signal à interférence SIR_{c} pour tous les canaux disponibles qui peuvent être alloués au terminal.

Le rapport signal à interférences SIR_{c} est le rapport de la puissance isotrope rayonnée équivalente PIREᵤ du faisceau d'antenne en direction du terminal utilisateur dans son spot sur la somme des puissances isotropes rayonnées équivalentes PIREⱼ des signaux interférents émis en direction du terminal utilisateur u et correspondants aux autres faisceaux d'antennes associés aux autres spots de la couverture. La puissance isotrope rayonnée équivalente PIRE étant le produit de la puissance radio par le gain de l'antenne, les différentes puissances isotropes rayonnées équivalentes PIREⱼ sont calculées à partir des puissances radio calculées dans la tâche 2030 et les gains d'antenne 1030 issus de la base de données antenne.

Il s'agit de calculer les bilans de liaison de toute les combinaisons d'allocation de terminaux aux canaux et de choisir à l'étape suivante 3040 la combinaison d'allocation terminaux / canaux maximisant le nombre de terminaux pouvant établir une liaison de la qualité demandée. C'est-à-dire vérifiant : SNRₙ⁻¹ + SIR_{c}⁻¹ ≤ SNRᵣ⁻¹.
Les calculs des rapports signal à interférence ne considèrent que les interférences dans la bande passante du canal en cours d'analyse, c'est-à-dire les interférences liées aux autres utilisateurs utilisant ce même canal. Les interférences dues aux utilisateurs des canaux adjacents ne sont pas pris en compte dans ce mode de réalisation de l'invention.

La difficulté de cette tâche tient dans l'augmentation exponentielle du nombre de calculs en fonction du nombre de combinaisons d'allocation possible et donc du nombre de terminaux et de canaux. Il s'agit d'un problème d'optimisation combinatoire. Dans un mode de réalisation de l'invention, l'utilisation d'un algorithme glouton permet de résoudre le problème d'optimisation pas par pas et d'obtenir une solution satisfaisante. Ainsi, en suivant l'ordre d'allocation défini à l'étape 2010, pour chaque terminal de la liste, on lui alloue le premier canal non utilisé de la liste des canaux. Si tous les bilans de liaison sont respectés

(SNRₙ⁻¹ + SIR_{c}⁻¹ ≤ SNRᵣ⁻¹), ce canal est alloué à ce terminal et on passe au terminal suivant dans la liste. Dans le cas contraire, on essaie d'allouer à ce terminal le canal suivant et ainsi de suite jusqu'à la fin de la liste des canaux. Si aucun canal ne permet une allocation au terminal, ce terminal est rejeté de la liste.

Dans une étape suivante 2050, on calcule les plans de fréquence des liaisons d'alimentation. Si la bande passante des liaisons d'alimentation ne permet pas de multiplexer le nombre de canaux qui ont été alloués aux terminaux, les terminaux en surnombre sont rejetés à l'étape 3050.

Enfin, dans une dernière étape 2060, on finalise le trafic de la trame temporelle suivante et on calcule la configuration matérielle du satellite et des stations d'alimentation qui sera transmise par les liaisons de communication 75 et 11 de la figure 7.

La figure 11 représente, à titre d'illustration, deux exemples de diagrammes d'antennes pour deux spots différents.

La figure 12 représente, sur un diagramme temps fréquence, un exemple d'allocation de canaux fréquentiels à différents spots. Sur cet exemple, les canaux 1 et 2 sont alloués à certains utilisateurs du spot 1, les canaux 2,4 et 5 sont alloués à certains utilisateurs du spot 2, les canaux 2 et 4 sont alloués à certains utilisateurs du spot 3, les canaux 2,3,4,5 sont alloués à certains utilisateurs du spot 4.

La figure 13 donne un exemple de l'allocation des canaux 1 à 5 aux terminaux utilisateur U1 à U12 selon la méthode décrite à la figure 10. Dans cet exemple, le terminal U1 est le premier terminal de la liste des terminaux demandant un service. Ce terminal est localisé dans le spot 1. Le canal 1 est alloué au terminal U1 du spot 1. Le terminal suivant est le terminal U2 localisé dans le spot 2, la méthode d'allocation lui alloue le canal 2. Le terminal suivant U3 est localisé dans le spot 2. En première intention, le canal 1 est alloué au terminal U3. Les calculs des bilans de liaisons et en particulier le calcul des rapports signaux à interférents (les terminaux U1 du spot 1 et U3 du spot 2 interférent mutuellement) confirme la validité de cette allocation. Le terminal suivant U4 est dans le spot 3. Un premier essai d'allocation du canal 1 échoue du fait du niveau important des interférents, (ici les terminaux U1 et U3), le deuxième essai d'allocation du canal 2 réussi. L'application de la méthode d'allocation permet l'allocation de canaux aux terminaux à l'exception du terminal U11 pour lequel aucune configuration d'allocation ne permet d'établir une liaison avec la qualité de service requise.

La figure 14 représente un organigramme d'une variante de réalisation de la méthode selon l'invention décrite à la figure 10. Dans cette variante de réalisation, la charge utile du satellite est équipée d'antenne multifaisceaux actives et d'un processeur numérique transparent PNT comprenant un réseau de formation de faisceaux par calcul FFC. Le système est configuré pour opérer selon une méthode d'accès aux ressources de type SDMA (pour Spatial Division Multiple Access en anglais), c'est à dire que le système d'antennes AMU décrit à la figure 3 du satellite génère un faisceau en direction de chaque terminal actif ayant établi une liaison. Le système d'antennes AMU génère une multitude de faisceaux dynamiques, dont le nombre, les directions de pointage et les formes varient continuellement en fonction du trafic.

La méthode d'allocation selon la variante décrite à la figure 14 comprend les mêmes étapes de calculs que dans le cas de la méthode en mode spot fixe décrite à la figure 10 de l'étape 2010 à l'étape 2060. La différence entre les deux variantes de l'invention réside dans le fait que les gains d'antenne nécessaires pour les calculs de bilans de liaisons effectués à l'étape 2020, les calculs de puissance radio effectués à l'étape 2030 et les calculs de niveau d'interférences effectués à l'étape 2040 ne sont pas issus d'une base de donnée antenne mais sont fournis par une étape de calcul des diagrammes des spots 2070. Cette étape de calcul 2070 synthétise les faisceaux dynamiques pointant sur tous les terminaux de la liste, élabore et transmet les diagrammes de gain de ces faisceaux aux étapes 2020, 2030 et 2040 et fournit les lois de commande 1050 destinées au réseau de formation de faisceaux par calcul FFC inclus dans le processeur numérique transparent PNT. Ces lois de commande 1050 permettent à l'antenne active de générer les faisceaux dynamiques pointant les terminaux pour la prochaine trame d'allocation.
Eventuellement, les diagrammes de gain calculés à l'étape 2070 sont stockés dans une base de données antennes et réutilisés le cas échéant lors d'un autre calcul d'allocation.

## Revendications

1. Méthode d'allocation de canaux fréquentiels, parmi une liste de canaux, à une pluralité de terminaux dans un système de télécommunications par satellite multi-faisceaux comprenant un satellite et au moins une station d'alimentation, le satellite comprenant au moins un amplificateur et au moins une antenne, la méthode comprenant les étapes de :
- Etablir (2010) une liste de terminaux actifs et, pour chaque terminal,
- Déterminer (2020) un premier rapport signal à bruit SNRₙ pour la liaison entre une station d'alimentation et le terminal via le satellite, au moins à partir d'une estimée de l'atténuation (1020) subie par le signal en fonction des conditions de propagation du signal,
- Retirer (3020) le terminal de la liste de terminaux actifs si le premier rapport signal à bruit est inférieur à un seuil prédéterminé,
- Calculer (2030) la puissance radiofréquence nécessaire de l'amplificateur associé au faisceau éclairant le terminal pour obtenir ledit premier rapport signal à bruit,
- Retirer (3030) le terminal de la liste de terminaux actifs si la somme des puissances radiofréquences nécessaires de tous les amplificateurs du satellite dépasse un seuil de capacité de puissance maximum,
- Pour chaque canal sélectionné dans la liste de canaux fréquentiels,
i. Calculer (2040) un rapport signal à interférences SIR_{c} pour ledit terminal dans le canal sélectionné,
ii. Si la somme du premier rapport signal à bruit SNRₙ et du rapport signal à interférences SIR_{c} est inférieure audit seuil prédéterminé, allouer le canal sélectionné audit terminal,
iii. Sinon, sélectionner un autre canal.

2. Méthode d'allocation de canaux fréquentiels selon la revendication 1 dans laquelle le premier rapport signal à bruit SNRₙ est déterminé à partir d'un rapport signal à bruit plus interférences SNIRₛ sur une liaison d'alimentation entre une station d'alimentation et le satellite et d'un second rapport signal à bruit SNR_{d} pour la liaison descendante entre le satellite et le terminal.

3. Méthode d'allocation de canaux fréquentiels selon la revendication 2 dans laquelle le second rapport signal à bruit SNR_{d} est déterminé au moins à partir de la puissance isotrope rayonnée équivalente PIREᵤ émise par une antenne du satellite en direction dudit terminal, d'une estimée de l'atténuation Aᵤ subie par le signal en fonction des conditions de propagation du signal.

4. Méthode d'allocation de canaux fréquentiels selon l'une des revendications précédentes dans laquelle la puissance radiofréquence nécessaire de l'amplificateur associé au faisceau éclairant le terminal est déterminée au moins à partir d'un gain de l'antenne du satellite générant ledit faisceau dans la direction du terminal.

5. Méthode d'allocation de canaux fréquentiels selon la revendication 4 dans laquelle les faisceaux générés par le satellite sont fixes et les gains des antennes du satellite sont pré-calculés et stockés dans une base de données.

6. Méthode d'allocation de canaux fréquentiels selon la revendication 4 dans laquelle les faisceaux générés par le satellite sont reconfigurables et les gains des antennes du satellite sont déterminés par un module de calcul de diagrammes d'antennes.

7. Méthode d'allocation de canaux fréquentiels selon l'une des revendications précédentes dans laquelle les puissances radiofréquences nécessaires de tous les amplificateurs du satellite sont calculées pour chaque terminal auquel a été alloué un canal fréquentiel.

8. Méthode d'allocation de canaux fréquentiels selon l'une des revendications précédentes dans laquelle le seuil prédéterminé est un rapport signal à bruit requis pour assurer un niveau donné de qualité de service.

9. Méthode d'allocation de canaux fréquentiels selon l'une des revendications précédentes dans laquelle les conditions de propagation du signal sont déterminées à partir de données météorologiques.

10. Méthode d'allocation de canaux fréquentiels selon l'une des revendications précédentes dans laquelle les étapes de la méthode sont itérées en faisant varier à chaque itération un créneau temporel alloué aux terminaux pour communiquer.

11. Gestionnaire de ressources radio (RRM) configuré pour mettre en œuvre la méthode d'allocation de canaux fréquentiels selon l'une des revendications précédentes.

12. Système de télécommunications par satellite comprenant un satellite multi-faisceaux (SAT), au moins une station d'alimentation (SA1,SA2) pour établir une liaison de communication entre un réseau (INT) et une pluralité de terminaux (TER), via le satellite (SAT), et un gestionnaire de ressources radio (RRM) selon la revendication 11.

## Patentansprüche

1. Zuordnungsverfahren von Frequenzkanälen aus einer Liste von Kanälen, an eine Vielzahl von Endgeräten in einem mehrstrahligen Satelliten-Telekommunikationssystem, beinhaltend einen Satelliten und mindestens eine Speisungsstation, wobei der Satellit mindestens einen Verstärker und mindestens eine Antenne beinhaltet, wobei das Verfahren folgende Schritte beinhaltet:
- Erstellen (2010) eine Liste aktiver Endgeräte, und für jedes Endgerät,
- Bestimmen (2020) eines ersten Signal-zu-Rauschen-Verhältnisses SNRₙ für die Verbindung zwischen einer Speisungsstation und dem Endgerät über den Satelliten, mindestens anhand einer Schätzung der durch das Signal angesichts der Fortpflanzungsbedingungen des Signals erfahrenen Dämpfung (1020),
- Entfernen (3020) des Endgerätes aus der Liste aktiver Endgeräte, wenn das erste Signal-zu-Rauschen-Verhältnis einen vorbestimmten Schwellenwert unterschreitet,
- Berechnen (2030) der notwendigen Funkfrequenzleistung des demjenigen Strahl zugeordneten Verstärkers, welcher das Endgerät beleuchtet, um das erste Signal-zu-Rauschen-Verhältnis zu erzielen,
- Entfernen (3030) des Endgerätes aus der Liste aktiver Endgeräte, wenn die Summe der notwendigen Funkfrequenzleistungen der Verstärker des Satelliten einen maximalen Leistungskapazität-Schwellenwert überschreitet,
- für jeden in der Liste der Frequenzkanäle ausgewählten Kanal,
i. Berechnen (2040) eines Signal-zu-Interferenzen-Verhältnisses SIR_{c} für das Endgerät in dem ausgewählten Kanal,
ii. wenn die Summe des ersten Signal-zu-Rauschen-Verhältnisses SNRₙ und des Signal-zu-Interferenzen-Verhältnisses SIR_{c} den vorbestimmten Schwellenwert unterschreitet, Zuordnen des ausgewählten Kanals an das Endgerät,
iii. ansonsten, Auswählen eines anderen Kanals.

2. Zuordnungsverfahren von Frequenzkanälen nach Anspruch 1, bei welchem das erste Signal-zu-Rauschen-Verhältnis SNRₙ anhand eines Signal-zu-Rauschen-Verhältnisses plus Interferenzen SNIRₛ an einer Speisungsverbindung zwischen einer Speisungsstation und dem Satelliten, und anhand eines zweiten Signal-zu-Rauschen-Verhältnisses SNR_{d} für die Abwärtsverbindung zwischen dem Satelliten und dem Endgerät bestimmt wird.

3. Zuordnungsverfahren von Frequenzkanälen nach Anspruch 2, bei welchem das zweite Signal-zu-Rauschen-Verhältnis SNR_{d} mindestens anhand der äquivalenten isotropen Strahlungsleistung PIREᵤ, welche durch eine Antenne des Satelliten in Richtung des Endgerätes ausgesendet wird, [und] anhand einer Schätzung der durch das Signal angesichts der Fortpflanzungsbedingungen des Signals erfahrenen Dämpfung Aᵤ bestimmt wird.

4. Zuordnungsverfahren von Frequenzkanälen nach einem der vorhergehenden Ansprüche, bei welchem die notwendige Funkfrequenzleistung desjenigen Strahls, welcher das Endgerät beleuchtet, mindestens anhand einer Verstärkung der Antenne des Satelliten bestimmt wird, welche den Strahl in die Richtung des Endgerätes erzeugt.

5. Zuordnungsverfahren von Frequenzkanälen nach Anspruch 4, bei welchem die durch den Satelliten erzeugten Strahlen fix sind und die Verstärkungen der Antennen des Satelliten vorberechnet und in einer Datenbank gespeichert sind.

6. Zuordnungsverfahren von Frequenzkanälen nach Anspruch 4, bei welchem die durch den Satelliten erzeugten Strahlen rekonfigurierbar sind und die Verstärkungen der Antennen des Satelliten durch ein Antennendiagramm-Berechnungsmodul bestimmt werden.

7. Zuordnungsverfahren von Frequenzkanälen nach einem der vorhergehenden Ansprüche, bei welchem die notwendigen Funkfrequenzleistungen aller Verstärker des Satelliten für jedes Endgerät berechnet werden, welchem ein Frequenzkanal zugeordnet wurde.

8. Zuordnungsverfahren von Frequenzkanälen nach einem der vorhergehenden Ansprüche, bei welchem der vorbestimmte Schwellenwert ein zur Gewährleistung eines gegebenen Dienstqualitätslevels erforderliches Signal-zu-Rauschen-Verhältnis ist.

9. Zuordnungsverfahren von Frequenzkanälen nach einem der vorhergehenden Ansprüche, bei welchem die Fortpflanzungsbedingungen des Signals anhand der meteorologischen Daten bestimmt werden.

10. Zuordnungsverfahren von Frequenzkanälen nach einem der vorhergehenden Ansprüche, bei welchem die Schritte des Verfahrens wiederholt werden, wobei bei jeder Wiederholung ein den Endgeräten zum Kommunizieren zugeordneter Zeitabschnitt variiert wird.

11. Funkressourcen-Manager (RRM), welcher konfiguriert ist, um das Zuordnungsverfahren von Frequenzkanälen nach einem der vorhergehenden Ansprüche umzusetzen.

12. Satelliten-Telekommunikationssystem, beinhaltend einen mehrstrahligen Satelliten (SAT), mindestens eine Speisungsstation (SA1, SA2) zum Herstellen einer Kommunikationsverbindung zwischen einem Netzwerk (INT) und einer Vielzahl von Endgeräten (TER) über den Satelliten (SAT) und einen Funkressourcen-Manager (RRM) nach Anspruch 11.

## Claims

1. Method of allocating frequency channels, from among a list of channels, to a plurality of terminals in a multi-beam satellite telecommunications system comprising a satellite and at least one feeder station, the satellite comprising at least one amplifier and at least one antenna, the method comprising the steps of:
- Establishing (2010) a list of active terminals and, for each terminal,
- Determining (2020) a first signal-to-noise ratio SNRₙ for the link between a feeder station and the terminal via the satellite, at least on the basis of an estimate of the attenuation (1020) undergone by the signal as a function of the signal propagation conditions,
- Removing (3020) the terminal from the list of active terminals if the first signal-to-noise ratio is less than a predetermined threshold,
- Computing (2030) the necessary radiofrequency power of the amplifier associated with the beam illuminating the terminal to obtain the said first signal-to-noise ratio,
- Removing (3030) the terminal from the list of active terminals if the sum of the necessary radiofrequency powers of all the amplifiers of the satellite exceeds a maximum power capacity threshold,
- For each channel selected from the list of frequency channels,
i. Computing (2040) a signal-to-interference ratio SIR_{c} for the said terminal in the selected channel,
ii. If the sum of the first signal-to-noise ratio SNRₙ and of the signal-to-interference ratio SIR_{c} is less than the said predetermined threshold, allocating the selected channel to the said terminal,
iii. Otherwise, selecting another channel.

2. Method of allocating frequency channels according to Claim 1 in which the first signal-to-noise ratio SNRₙ is determined on the basis of a signal-to-noise plus interference ratio SNIRₛ on a feeder link between a feeder station and the satellite and of a second signal-to-noise ratio SNR_{d} for the downlink between the satellite and the terminal.

3. Method of allocating frequency channels according to Claim 2 in which the second signal-to-noise ratio SNR_{d} is determined at least on the basis of the equivalent isotropic radiated power EIRPᵤ emitted by an antenna of the satellite in the direction of the said terminal, of an estimate of the attenuation Aᵤ undergone by the signal as a function of the signal propagation conditions.

4. Method of allocating frequency channels according to any one of the preceding claims in which the necessary radiofrequency power of the amplifier associated with the beam illuminating the terminal is determined at least on the basis of a gain of the antenna of the satellite generating the said beam in the direction of the terminal.

5. Method of allocating frequency channels according to Claim 4 in which the beams generated by the satellite are fixed and the gains of the antennas of the satellite are precomputed and stored in a database.

6. Method of allocating frequency channels according to Claim 4 in which the beams generated by the satellite are reconfigurable and the gains of the antennas of the satellite are determined by a module for computing antenna radiation patterns.

7. Method of allocating frequency channels according to any one of the preceding claims in which the necessary radiofrequency powers of all the amplifiers of the satellite are computed for each terminal to which a frequency channel has been allocated.

8. Method of allocating frequency channels any one of the preceding claims in which the predetermined threshold is a signal-to-noise ratio required to ensure a given quality-of-service level.

9. Method of allocating frequency channels according to any one of the preceding claims in which the signal propagation conditions are determined on the basis of meteorological data.

10. Method of allocating frequency channels according to any one of the preceding claims in which the steps of the method are iterated while varying at each iteration a time slot allocated to the terminals in order to communicate.

11. Radio resources manager (RRM) configured to execute the method of allocating frequency channels according to any one of the preceding claims.

12. Satellite telecommunications system comprising a multi-beam satellite (SAT), at least one feeder station (SA1, SA2) to establish a communication link between a network (INT) and a plurality of terminals (TER), via the satellite (SAT), and a radio resources manager (RRM) according to Claim 11.
